# EUROPÄISCHE PATENTANMELDUNG

(11) **EP 2 639 427 A2**
(43) Veröffentlichungstag der Anmeldung: **18.09.2013**
(21) Anmeldenummer: 13156121.9
(22) Anmeldetag: 21.02.2013
(51) Int. Cl.: F02C 6/16

(54) **Druckluftspeicher-Turbinen-Kraftwerk sowie Verfahren zum Trocknen von feuchter Druckluft bei einem Druckluftspeicher-Turbinen-Kraftwerk**

(30) Priorität: 15.03.2012 DE 102012204078
(71) Anmelder: Siemens Aktiengesellschaft, 80333 München (DE)
(72) Erfinder: Hertwig, Holger, 02708 Großschweidnitz (DE)

(57) **Zusammenfassung**

Die Erfindung betrifft ein Druckluftspeicher-Turbinen-Kraftwerk (1), aufweisend einen Speicher (2) zum Speichern von Druckluft (5), einen Zentrifugalabscheider (3) und eine Turbine (4), wobei feuchte Druckluft (5) aus dem Speicher (2) über den Zentrifugalabscheider (3) der Turbine (4) zuführbar ist und wobei der Zentrifugalabscheider (3) zum Abscheiden von Kondensat (6) aus der Druckluft (5) ausgebildet ist, bei dem eine Kühleinrichtung (7) zwischen dem Speicher (2) und dem Zentrifugalabscheider (3) zum Kühlen der dem Zentrifugalabscheider (3) zuströmenden Druckluft (5) vorgesehen ist. Ferner betrifft die Erfindung ein Verfahren zum Trocknen von feuchter Druckluft (5) bei einem Druckluftspeicher-Turbinen-Kraftwerk (1).

## Beschreibung

Die Erfindung betrifft ein Druckluftspeicher-Turbinen-Kraftwerk, aufweisend einen Speicher zum Speichern von Druckluft, einen Zentrifugalabscheider und eine Turbine, wobei feuchte Druckluft aus dem Speicher über den Zentrifugalabscheider der Turbine zuführbar ist und wobei der Zentrifugalabscheider zum Abscheiden von Kondensat aus der Druckluft ausgebildet ist. Die Turbine kann eine Gas- oder Luftturbine sein. Ferner betrifft die Erfindung ein Verfahren zum Trocknen von feuchter Druckluft bei einem Druckluftspeicher-Turbinen-Kraftwerk, aufweisend einen Speicher zum Speichern von Druckluft, einen Zentrifugalabscheider und eine Turbine, wobei feuchte Druckluft aus dem Speicher über den Zentrifugalabscheider der Turbine zuführbar ist und wobei der Zentrifugalabscheider zum Abscheiden von Kondensat aus der Druckluft ausgebildet ist.

Druckluftspeicher-Turbinen-Kraftwerke, wie beispielsweise Druckluftspeicher-Gasturbinen-Kraftwerke, sogenannte CAES-Kraftwerke, ermöglichen die Speicherung von Überschuss-Leistung in Zeiten starken Energieaufkommens und die zeitversetzte Abrufung der gespeicherten Energie bei erhöhter Nachfrage. CAES-Kraftwerke (CAES = Compressed Air Energy Storage) eignen sich besonders dort, wo eine Energieproduktion nicht bedarfsanfällig anfällt. Insbesondere bei der Wind- oder Sonnenenergie-Erzeugung kann Energie gespeichert und im Bedarfsfall abgerufen werden. Die erzeugte Energie wird in Form von Druckluft in einem Druckluftspeicher gespeichert und kann bei Bedarf zur Erzeugung von mechanischer Leistung einer Turbine, insbesondere einer sogenannten Expansionsturbine, zugeführt werden. Wird keine mechanische Energie benötigt, so absorbiert ein von einem Elektromotor angetriebener Verdichter die überschüssige Energie zur Einlagerung von Druckluft in den Speicher, der als Untertagespeicher, insbesondere als Salzkaverne, ausgebildet sein kann. Wird elektrische Energie nachgefragt, so kann die komprimierte Luft aus dem Speicher einer Brennkammer der Turbine zugeführt werden. Zusätzlich kann bei einer Gasturbine Brennstoff, insbesondere Brenngas, der Brennkammer der Gasturbine zugeführt werden, um die Druckluft zu erhitzen und zu verbrennen. Das Brennstoff/Druckluft-Gemisch expandiert dann in der Gasturbine und treibt eine Welle eines nachgeschalteten Generators an.

Das Problem besteht bei CAES-Anwendungen darin, dass die Druckluft feuchtigkeitsgesättigt den Speicher verlässt. Die hohe Beladung mit Feuchtigkeit limitiert die untere Entspannungstemperaturgrenze, da Kondensation in der Turbine, das heißt einer Luftturbine oder Gasturbine, ausgeschlossen werden muss. Gleichzeitig stellt eine tiefe Entspannungsendtemperatur jedoch einen hohen Wirkungsgrad sicher. Es ist bekannt, Zentrifugalabscheider, insbesondere Hochgeschwindigkeitszentrifugalabscheider, mit einem Kondensatwasserauslass zur Trocknung von Sattdampf einzusetzen. Es hat sich aber herausgestellt, dass trotz des Einsatzes eines Zentrifugalabscheiders beispielsweise die der Brennkammer einer Gasturbine zugeführte Luft teilweise immer noch zu feucht ist, was zu einer Beschädigung der Gasturbine, insbesondere der Beschaufelung der Gasturbine führen kann.

Daher ist es Aufgabe der vorliegenden Erfindung, die voranstehend beschriebenen Nachteile bekannter Druckluftspeicher-Turbinen-Kraftwerke zumindest teilweise zu beheben. Insbesondere soll bei einem Druckluftspeicher-Turbinen-Kraftwerk die Luft, die aus dem Speicher des Kraftwerks der Turbine des Kraftwerks zugeführt wird, auf eine einfache Art und Weise verbessert getrocknet werden.

Diese Aufgabe wird erfindungsgemäß durch ein Druckluftspeicher-Turbinen-Kraftwerk mit den Merkmalen gemäß Anspruch 1 sowie durch ein Verfahren zum Trocknen von feuchter Druckluft bei einem Druckluftspeicher-Turbinen-Kraftwerk mit den Merkmalen gemäß Anspruch 7 gelöst. Weitere Merkmale und Details der Erfindung ergeben sich aus den Unteransprüchen, der Beschreibung und der beigefügten Figur. Dabei gelten Merkmale, die im Zusammenhang mit dem erfindungsgemäßen Druckluftspeicher-Turbinen-Kraftwerk beschrieben sind, selbstverständlich auch im Zusammenhang mit dem erfindungsgemäßen Verfahren und jeweils umgekehrt, so dass bezüglich der Offenbarung zu den einzelnen Erfindungsaspekten stets wechselseitig Bezug genommen wird beziehungsweise werden kann.

Gemäß des ersten Aspektes der Erfindung wird die Aufgabe durch ein Druckluftspeicher-Turbinen-Kraftwerk, aufweisend einen Speicher zum Speichern von Druckluft, einen Zentrifugalabscheider und eine Turbine, gelöst. Das Druckluftspeicher-Turbinen-Kraftwerk ist derart ausgebildet, dass feuchte Druckluft aus dem Speicher über den Zentrifugalabscheider der Turbine zuführbar ist. Der Zentrifugalabscheider ist zum Abscheiden von Kondensat aus der Druckluft ausgebildet. Das Druckluftspeicher-Turbinen-Kraftwerk ist dadurch gekennzeichnet, dass eine Kühleinrichtung zwischen dem Speicher und dem Zentrifugalabscheider zum Kühlen der dem Zentrifugalabscheider zuströmenden Druckluft vorgesehen ist.

Die Turbine des Druckluftspeicher-Gasturbinen-Kraftwerks kann als Luft- oder als Gasturbine ausgebildet sein. Insbesondere kann in dem Speicher Luft gespeichert werden. Es ist aber auch möglich, dass ein Luftgemisch, insbesondere ein Luft-Gas-Gemisch, oder ein Gas in dem Speicher des Druckluftspeicher-Gasturbinen-Kraftwerks gespeichert werden kann. Der Speicher kann insbesondere eine natürliche oder künstlich geschaffene Kaverne sein.

Durch ein derartig ausgebildetes Druckluftspeicher-Turbinen-Kraftwerk kann die Luft, die aus dem Speicher des Kraftwerks der Turbine des Kraftwerks zugeführt wird, auf eine einfache Art und Weise verbessert getrocknet werden. Durch die zusätzliche Kondensation der Druckluft ist ferner ein verbesserter Schutz der technischen Einrichtungen vor Kondensat und Korrosion gegeben. Die Entspannungsendtemperatur kann herabgesenkt werden, ebenso wie der Partialdruck der Druckluft beziehungsweise des Sauerstoffs in der Druckluft.

Bei einem derartig ausgebildeten Druckluftspeicher-Turbinen-Kraftwerk kann die Druckluft vor dem Eintritt in den Zentrifugalabscheider, der insbesondere als Hochtemperaturzentrifugalabscheider ausgebildet ist, unterkühlt werden. Dabei fällt zusätzliches Kondensat aus, welches über einen Kondensatauslauf des Zentrifugalabscheiders abgeführt werden kann. Das heißt, durch die Kühleinrichtung und die dadurch ermöglichte Unterkühlung der Druckluft erhöht sich die absolute Menge an abgeschiedenem Kondensat. Die Druckluft verlässt den Zentrifugalabscheider verbessert feuchtigkeitsgesättigt, im Idealfall tröpfchenfrei.

Durch ein derartiges Druckluftspeicher-Turbinen-Kraftwerk kann insbesondere die Belastung der Turbine verringert und damit die Lebensdauer der Turbine verlängert werden.

Gemäß einer bevorzugten Weiterentwicklung der Erfindung kann bei einem Druckluftspeicher-Turbinen-Kraftwerk vorgesehen sein, dass eine Heizeinrichtung zwischen dem Zentrifugalabscheider und der Turbine zum Aufheizen der der Turbine zuströmenden Druckluft vorgesehen ist. Hierdurch kann die Belastung der Turbine nochmals verringert und damit die Lebensdauer der Turbine nochmals verlängert werden. Das heißt, bei einem derartigen Druckluftspeicher-Turbinen-Kraftwerk kann die Luft, die aus dem Speicher des Kraftwerks der Turbine des Kraftwerks zugeführt wird, auf eine einfache Art und Weise nochmals verbessert getrocknet werden. Die getrocknete Druckluft wird vor dem Eintritt in die Turbine durch die Heizeinrichtung erhitzt, so dass sichergestellt ist, dass keine Kondensation der Druckluft in der Turbine erfolgt. Durch die zusätzliche Aufheizung der Druckluft ist ein verbesserter Schutz der technischen Einrichtungen, insbesondere der Turbine, vor Kondensat und Korrosion gegeben. Die Entspannungsendtemperatur kann durch die zusätzliche Heizeinrichtung nochmals herabgesenkt werden, ebenso wie der Partialdruck der Druckluft beziehungsweise des Sauerstoffs in der Druckluft.

Sowohl der Kühleinrichtung, als auch die Heizeinrichtung stellen sogenannte Wärmetauscher dar, bei denen thermische Energie von einem Medium auf ein anderes Medium, hier von einem Kühlmedium auf die Druckluft beziehungsweise von einem Heizmedium auf die Druckluft, übergeht. Insbesondere können sowohl die Kühleinrichtung, als auch die Heizeinrichtung als Gegenstromwärmetauscher ausgebildet sein. Dabei ist die Kühleinrichtung vorteilhafterweise derart ausgebildet, dass ein Kühlmedium entlang der Rohrleitung, durch die die Druckluft strömt, entgegen der Strömungsrichtung der Druckluft fließt. Die Heizeinrichtung ist vorteilhafterweise ebenfalls derart ausgebildet, dass das Heizmedium entlang der Rohrleitung, durch die die Druckluft strömt, entgegen der Strömungsrichtung der Druckluft fließt.

Besonders vorteilhaft kann bei einem zuvor beschriebenen Druckluftspeicher-Turbinen-Kraftwerk vorgesehen sein, dass die Kühleinrichtung und die Heizeinrichtung derart fluidströmend miteinander verbunden sind, dass ein aufgeheiztes Kühlmedium der Kühleinrichtung als Heizmedium der Heizeinrichtung zuführbar ist. Das heißt, die Kühleinrichtung und die Heizeinrichtung sind über einen Kanal miteinander verbunden. Das aufgeheizte Kühlmedium fließt durch den Kanal bis zu der Heizeinrichtung, so dass das aufgeheizte Kühlmedium als Heizmedium in der Heizeinrichtung genutzt werden kann. Hierdurch kann energieeffizient die durch die Kühleinrichtung heruntergekühlte Druckluft nach dem Verlassen des Zentrifugalabscheiders wieder aufgeheizt werden. Bei einem derartigen Druckluftspeicher-Turbinen-Kraftwerk kann die Druckluft vor dem Eintritt in den Zentrifugalabscheider, insbesondere den Hochtemperaturzentrifugalabscheider unterkühlt werden. Dadurch erhöht sich die absolute Menge an abgeschiedenem Kondensat. Das anfallende Kondensat kann durch den Zentrifugalabscheider abgeführt werden. Mit dem Kühlmedium vom Austritt der Kühleinrichtung wird die zu trocknende Druckluft hinter dem Zentrifugalabscheider wieder beheizt. Die Druckluft verlässt den Zentrifugalabscheider feuchtigkeitsgesättigt, im Idealfall jedoch tröpfchenfrei. Spätestens nach der Heizeinrichtung ist die Druckluft trocken beziehungsweise tröpfchenfrei. Um in den der Heizeinrichtung nachfolgenden Rohrleitungen Kondensatfreiheit sicherzustellen, reicht es in der Regel aus, die Druckluft nur leicht zu erwärmen, damit ca. 90% rel. Luftfeuchte erreicht wird. Für diese leichte Erwärmung reicht der Energiegehalt des aufgeheizten Kühlmediums aus der Kühleinrichtung in der Regel aus.

Allgemein betrachtet sind bei den erfindungsgemäßen Druckluftspeicher-Turbinen-Kraftwerken zwischen den jeweiligen Komponenten Rohrleitungen angeordnet, durch die die Druckluft hindurchströmt. Das bedeutet, zwischen dem Speicher und dem Zentrifugalabscheider und zwischen dem Zentrifugalabscheider und der Turbine sind Rohrleitungen vorgesehen, durch die die Druckluft strömen kann. Ist zusätzlich eine Heizeinrichtung vorgesehen, ist zwischen dem Zentrifugalabscheider und der Heizeinrichtung sowie dem Zentrifugalabscheider und der nachfolgenden Turbine jeweils eine Rohrleitung zum Durchfluss der Druckluft vorgesehen. In dem Kanal zwischen der Kühleinrichtung und der Heizeinrichtung kann ein Ventil, insbesondere ein 3/2-Weg-Ventil, angeordnet sein, durch das die Durchflussmenge zu der Heizeinrichtung gesteuert werden kann.

Die Druckluft kann im Sinne der Erfindung nicht nur als Luft bestehen, sondern auch ein anderes gasförmiges Medium, insbesondere ein Gemisch aus verschiedenen gasförmigen Medien sein.

Gemäß einer weiteren bevorzugten Weiterentwicklung der Erfindung kann bei einem Druckluftspeicher-Turbinen-Kraftwerk vorgesehen sein, dass nach dem Zentrifugalabscheider, insbesondere nach der Heizeinrichtung, eine Brennstoffeindüsung zur Eindüsung von Brennstoff in die getrocknete Druckluft vorgesehen ist und dass eine Brennkammer vorgesehen ist, in die das Druckluft/Brennstoff-Gemisch zuführbar ist. Das heißt, nach der Erwärmung der Druckluft in der Heizeinrichtung kann sich eine Brennstoffeindüsung anschließen, in der Brennstoff eingedüst und verbrannt wird. Dadurch kann die Erwärmung der Druckluft unterstützt werden. Das ist bei CAES-Anwendungen, insbesondere bei Luft-Freileitungen im Winter, vorteilhaft. Ein weiterer Vorteil der Verbrennung ist der damit verbundene Rückgang des Sauerstoffpartialdrucks in der Druckluft. Dies stellt eine zusätzliche Korrosionsschutzmaßnahme dar.

Der Zentrifugalabscheider eines Druckluftspeicher-Turbinen-Kraftwerks ist vorzugsweise ein Hochtemperaturzentrifugalabscheider.

Gemäß einer weiteren bevorzugten Weiterentwicklung der Erfindung kann bei einem Druckluftspeicher-Turbinen-Kraftwerk vorgesehen sein, dass eine Gasturbine vorgesehen ist, die dem Zentrifugalabscheider nachschaltet ist, dass ein Wärmeübertrager der Gasturbine nachgeschaltet ist und dass dem Wärmeübertrager eine Luftturbine nachgeschaltet ist. Dabei kann die Wärmeübertrager auch mit dem Zentrifugalabscheider verbunden sein.

Vorteile der zuvor erwähnten Druckluftspeicher-Turbinen-Kraftwerke sind die Nutzung der Abwärme der Kühleinrichtung zum Heizen der Druckluft, der Schutz der technischen Komponenten, insbesondere der Luft- oder Gasturbine, vor Kondensat und Korrosion, die mögliche Absenkung der Entspannungsendtemperatur sowie die Senkung des Sauerstoffpartialdrucks der Druckluft.

Gemäß eines zweites Aspektes der Erfindung wird die Aufgabe durch ein Verfahren zum Trocknen von feuchter Druckluft bei einem Druckluftspeicher-Turbinen-Kraftwerk, aufweisend einen Speicher zum Speichern von Druckluft, einen Zentrifugalabscheider und eine Turbine, wobei feuchte Druckluft aus dem Speicher über den Zentrifugalabscheider der Turbine zuführbar ist und wobei der Zentrifugalabscheider zum Abscheiden von Kondensat aus der Druckluft ausgebildet ist, gelöst. Erfindungsgemäß ist bei dem Verfahren vorgesehen, dass die dem Zentrifugalabscheider zuströmende Druckluft durch eine Kühleinrichtung, die zwischen dem Speicher und dem Zentrifugalabscheider angeordnet ist, gekühlt wird.

Durch ein derartiges Verfahren kann die Luft, die aus dem Speicher des Druckluftspeicher-Turbinen-Kraftwerks der Turbine des Druckluftspeicher-Turbinen-Kraftwerks zugeführt wird, auf eine einfache Art und Weise verbessert getrocknet werden. Durch die zusätzliche Kondensation der Druckluft ist ferner ein verbesserter Schutz der technischen Komponenten vor Kondensat und Korrosion gegeben. Die Entspannungsendtemperatur kann herabgesenkt werden, ebenso wie der Partialdruck der Druckluft beziehungsweise des Sauerstoffs in der Druckluft. Durch das Verfahren wird die Belastung der Turbine verringert und damit die Lebensdauer der Turbine erhöht.

Ferner kann bei einem Verfahren vorgesehen sein, dass die der Turbine zuströmende Druckluft durch eine Heizeinrichtung, die zwischen dem Zentrifugalabscheider und der Turbine angeordnet ist, aufgeheizt wird. Hierdurch kann die Belastung der Komponenten, insbesondere der Luft- oder Gasturbine, nochmals verringert und damit die Lebensdauer der Komponenten, insbesondere der Turbine, nochmals verlängert werden. Die Luft, die aus dem Speicher des Kraftwerks der Turbine des Kraftwerks zugeführt wird, kann auf eine einfache Art und Weise nochmals verbessert getrocknet werden. Durch Erhitzung der Druckluft vor Eintritt in die Turbine ist sichergestellt, dass keine Kondensation der Druckluft in der Turbine erfolgt. Durch die zusätzliche Aufheizung der Druckluft ist ein verbesserter Schutz der technischen Komponenten, insbesondere der Turbine, vor Kondensat und Korrosion gegeben. Die Entspannungsendtemperatur kann durch die zusätzliche Heizeinrichtung nochmals herabgesenkt werden, ebenso wie der Partialdruck der Druckluft beziehungsweise des Sauerstoffs in der Druckluft.

Besonders bevorzugt ist ein zuvor geschildertes Verfahren, bei dem zusätzlich das aufgeheizte Kühlmedium der Kühleinrichtung der Heizeinrichtung zum Aufheizen der Druckluft nach dem Zentrifugalabscheider zugeführt wird. Die Kühleinrichtung und die Heizeinrichtung sind derart fluidströmend miteinander verbunden, dass das aufgeheizte Kühlmedium der Kühleinrichtung als Heizmedium der Heizeinrichtung zuführbar ist. Hierdurch kann besonders energieeffizient die durch die Kühleinrichtung heruntergekühlte Druckluft nach dem Verlassen des Zentrifugalabscheiders wieder aufgeheizt werden.

Des Weiteren kann gemäß einer bevorzugten Weiterentwicklung der Erfindung bei einem Verfahren vorgesehen sein, dass nach dem Zentrifugalabscheider, insbesondere nach der Heizeinrichtung, über eine Brennstoffeindüsung Brennstoff in die getrocknete Druckluft eingedüst wird und dass das Druckluft/Brennstoff-Gemisch einer Brennkammer zugeführt wird. Das heißt, eine Brennstoffeindüsung schließt sich der Heizeinrichtung an. In der Brennstoffeindüsung wird Brennstoff in die erwärmte Druckluft eingedüst und verbrannt. Dadurch wird die Erwärmung der Druckluft unterstützt. Ferner kann dadurch der Sauerstoffpartialdruck in der Druckluft verringert werden. Dies stellt eine zusätzliche Korrosionsschutzmaßnahme dar.

Bevorzugt wird das Verfahren bei einem Druckluftspeicher-Turbinen-Kraftwerk gemäß des ersten Aspektes der Erfindung durchgeführt. Dabei gelten sämtliche Vorteile, die zu dem Druckluftspeicher-Turbinen-Kraftwerk gemäß dem ersten Aspekt der Erfindung aufgeführt worden sind, ebenso für das Verfahren zum Trocknen von feuchter Druckluft bei einem Druckluftspeicher-Turbinen-Kraftwerk gemäß dem zweiten Aspekt der Erfindung.

Die vorliegende Erfindung wird nachfolgend anhand der beigefügten Zeichnungsfigur näher erläutert. Es zeigt:
- Figur 1: eine schematische Darstellung eines Druckluftspeicher-Turbinen-Kraftwerks, das gemäß dem erfindungsgemäßen Konstruktionsprinzip ausgebildet ist,
- Figur 2: eine schematische Darstellung eines Druckluftspeicher-Turbinen-Kraftwerks mit einer Gasturbine,
- Figur 3: eine schematische Darstellung eines Druckluftspeicher-Turbinen-Kraftwerks mit einem Wärmeübertrager und einer Luftturbine, und
- Figur 4: eine schematische Darstellung eines Druckluftspeicher-Turbinen-Kraftwerks mit einer Luftturbine, einem Wärmeübertrager und einer Gasturbine.

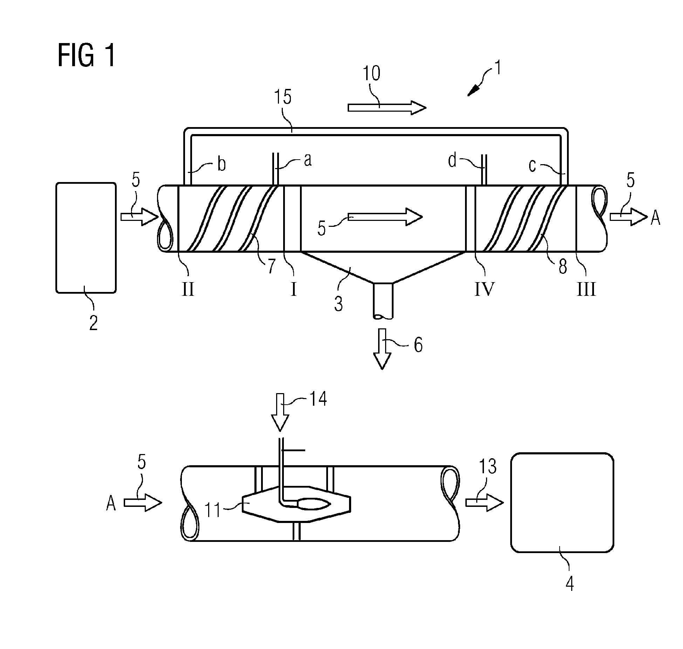

Elemente mit gleicher Funktion und Wirkungsweise sind in den Figuren 1 bis 4 jeweils mit denselben Bezugszeichen versehen.

In Fig. 1 ist schematisch ein Druckluftspeicher-Turbinen-Kraftwerk 1 dargestellt, das gemäß dem erfindungsgemäßen Konstruktionsprinzip ausgebildet ist. Das Druckluftspeicher-Turbinen-Kraftwerk 1 weist einen Speicher 2 zum Speichern von Druckluft 5 auf. Über eine Rohrleitung wird die Druckluft 5 einem Zentrifugalabscheider 3 zugeführt. Vor dem Zentrifugalabscheider 3 wird die Druckluft 5 durch eine Kühleinrichtung 7 unterkühlt. Die Kühleinrichtung 7 ist vorteilhafterweise als ein Gegenstromwärmetauscher ausgebildet. Die Kühleinrichtung 7 weist einen Kühlkanal auf, der um die Rohrleitung, in der die Druckluft 5 strömt, gewickelt ist. Die Kühleinrichtung 7 ist im Bereich der durch die Bezugszeichen I und II gekennzeichnet ist, um die Rohrleitung gewickelt. Das Kühlmedium strömt an Punkt a in die Kühleinrichtung 7 ein und strömt an Punkt b durch die Druckluft 5 ausgeheizt aus der Kühleinrichtung 7 hinaus. Dabei strömt das aufgeheizte Kühlmedium durch einen Kanal 15 zu einer Heizeinrichtung 8 des Druckluftspeicher-Turbinen-Kraftwerks 1. Die Strömungsrichtung des ausgeheizten Kühlmediums durch den Kanal 15 ist durch den Pfeil mit dem Bezugszeichen 10 gekennzeichnet. Die durch die Kühleinrichtung 7 gekühlte Druckluft 5 strömt zu dem Zentrifugalabscheider 3. Der Zentrifugalabscheider 3 ist zum Abscheiden von Kondensat 6 aus der Druckluft 5 ausgebildet. Dadurch, dass die Druckluft 5 vor dem Zentrifugalabscheider 3 heruntergekühlt wird, ist sichergestellt, dass vermehrt Kondensat 6 aus dem Zentrifugalabscheider 3, der insbesondere als Hochtemperaturzentrifugalabscheider ausgebildet ist, abgeschieden werden kann. Das heißt, durch die Kühleinrichtung 7 und die dadurch ermöglichte Unterkühlung der Druckluft 5 erhöht sich die absolute Menge an abgeschiedenem Kondensat 6, was dazu führt, dass die Druckluft 5 vor dem Eintritt in die Turbine 4 verbessert getrocknet ist. Nach dem Zentrifugalabscheider 3 wird die Druckluft 5 wieder leicht erwärmt. Dies erfolgt durch die Heizeinrichtung 8, die zwischen dem Zentrifugalabscheider 3 und der Turbine 4 angeordnet ist. Das heißt, die Heizeinrichtung 8 ist vorteilhafterweise als Gegenstromwärmetauscher ausgebildet. Die Heizeinrichtung 8 weist einen Heizkanal auf, der um die Rohrleitung, durch die die Druckluft 5 strömt, gewickelt ist. Die Heizeinrichtung 8 ist im Bereich, der durch die Bezugszeichen III und IV gekennzeichnet ist, um die Rohrleitung gewickelt. Das Heizmedium ist das durch die Kühleinrichtung 7 aufgeheizte Kühlmedium. Dieses strömt an Punkt c in die Heizeinrichtung 8 ein und strömt an Punkt d durch die Druckluft 5 gekühlt aus der Heizeinrichtung 8 hinaus.

Nach der Heizeinrichtung 8 wird die erwärmte und damit getrocknete Druckluft 5 der Turbine 4 zugeführt. Der Übergang zwischen Heizeinrichtung 8 und der Turbine 4 ist durch das Bezugszeichen A dargestellt.

Vor der Turbine 4 wird über eine Brennstoffeindüsung 11 Brennstoff 14 der erwärmten Druckluft 5 hinzugefügt. Das heißt, nach der Erwärmung der Druckluft 5 in der Heizeinrichtung 8 schließt sich eine Brennstoffeindüsung 11 an, in der Brennstoff 14 eingedüst und anschließend verbrannt wird. Hierdurch wird die Druckluft 5 nochmals erwärmt. Das Druckluft/Brennstoff-Gemisch 13 wird anschließend der Turbine 4 zugeführt.

Durch ein derartig ausgebildetes Druckluftspeicher-Turbinen-Kraftwerk 1 kann ein komprimiertes Medium, insbesondere Druckluft 5, das aus dem Speicher 2 des Druckluftspeicher-Turbinen-Kraftwerks 1 der Turbine 4 des Druckluftspeicher-Turbinen-Kraftwerks 1 zugeführt wird, auf eine einfache Art und Weise verbessert getrocknet werden. Durch die zusätzliche Kondensation der Druckluft 5 ist ein verbesserter Schutz der technischen Einrichtungen vor Kondensat 6 und Korrosion gegeben. Die Entspannungsendtemperatur der Turbine 4 kann herabgesenkt werden, ebenso wie der Partialdruck der Druckluft 5 beziehungsweise des Sauerstoffs in der Druckluft 5. Durch ein derartiges Druckluftspeicher-Turbinen-Kraftwerk 1 kann insbesondere die Belastung der Turbine 4 verringert und damit die Lebensdauer der Turbine 4 verlängert werden.

Die in Fig. 1 beschriebene Turbine 4 des Druckluftspeicher-Turbinen-Kraftwerks 1 kann insbesondere als Luftturbine oder als Gastrubine ausgebildet sein.

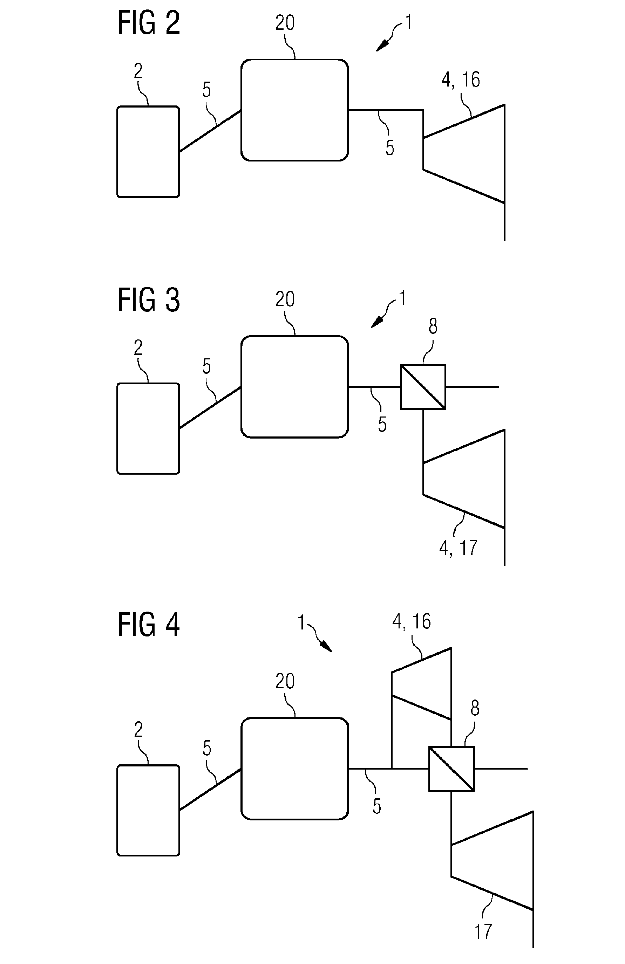

In den Fig. 2 bis 4 sind verschiedene erfindungsgemäße Druckluftspeicher-Turbinen-Kraftwerke 1 dargestellt. Mit Bezugszeichen 20 sind alle Einrichtungen eines erfindungsgemäßen Druckluftspeicher-Turbinen-Kraftwerks 1 gemäß dem ersten Aspekt der Erfindung ohne die Turbine 4 und den Speicher 2 bezeichnet.

In der Fig. 2 ist das Druckluftspeicher-Turbinen-Kraftwerk 1 dadurch gekennzeichnet, dass es als Turbine 4 eine Gasturbine 16 aufweist.

In der Fig. 3 ist das Druckluftspeicher-Turbinen-Kraftwerk 1 dadurch gekennzeichnet, dass es als Turbine 4 eine Luftturbine 17 aufweist. Zwischen dem Zentrifugalabscheider 3 und der Luftturbine 17 ist eine Heizeinrichtung beziehungsweise ein Wärmeübertrager 8 angeordnet. Die der Heizeinrichtung beziehungsweise dem Wärmeübertrager 8 zugeführte Wärme kann beispielsweise aus dem Abgas einer externen Gasturbine kommen.

In der Fig. 4 ist das Druckluftspeicher-Turbinen-Kraftwerk 1 dadurch gekennzeichnet, dass es als Turbine 4 eine Gasturbine 16 und zusätzlich eine Luftturbine 17 aufweist. Zwischen der Gasturbine 16 und der Luftturbine 17 ist eine Heizeinrichtung beziehungsweise ein Wärmeübertrager 8 angeordnet. Die Heizeinrichtung beziehungsweise der Wärmeübertrager 8 ist auch mit dem Zentrifugalabscheider verbunden.

## Patentansprüche

1. Druckluftspeicher-Turbinen-Kraftwerk (1), aufweisend einen Speicher (2) zum Speichern von Druckluft (5), einen Zentrifugalabscheider (3) und eine Turbine (4), wobei feuchte Druckluft (5) aus dem Speicher (2) über den Zentrifugalabscheider (3) der Turbine (4) zuführbar ist und wobei der Zentrifugalabscheider (3) zum Abscheiden von Kondensat (6) aus der Druckluft (5) ausgebildet ist
**dadurch gekennzeichnet,**
**dass** eine Kühleinrichtung (7) zwischen dem Speicher (2) und dem Zentrifugalabscheider (3) zum Kühlen der dem Zentrifugalabscheider (3) zuströmenden Druckluft (5) vorgesehen ist.

2. Druckluftspeicher-Gasturbinen-Kraftwerk (1) nach Anspruch 1,
**dadurch gekennzeichnet,**
**dass** die Turbine (4) eine Luftturbine oder eine Gasturbine ist.

3. Druckluftspeicher-Turbinen-Kraftwerk (1) nach Anspruch 1 oder 2,
**dadurch gekennzeichnet,**
**dass** eine Heizeinrichtung (8) zwischen dem Zentrifugalabscheider (3) und der Turbine (4) zum Aufheizen der der Turbine (4) zuströmenden Druckluft (5) vorgesehen ist.

4. Druckluftspeicher-Turbinen-Kraftwerk (1) nach Anspruch 3, **dadurch gekennzeichnet,**
**dass** die Kühleinrichtung (7) und die Heizeinrichtung (8) derart fluidströmend miteinander verbunden sind, dass ein aufgeheiztes Kühlmedium (9) der Kühleinrichtung (7) als Heizmedium der Heizeinrichtung (8) zuführbar ist.

5. Druckluftspeicher-Turbinen-Kraftwerk (1) nach mindestens einem der vorhergehenden Ansprüche,
**dadurch gekennzeichnet,**
**dass** nach dem Zentrifugalabscheider (3), insbesondere nach der Heizeinrichtung (8), eine Brennstoffeindüsung (11) zur Eindüsung von Brennstoff (14) in die getrocknete Druckluft (5) vorgesehen ist und dass eine Brennkammer (12) vorgesehen ist, in die das Druckluft/Brennstoff-Gemisch (13) zuführbar ist.

6. Druckluftspeicher-Turbinen-Kraftwerk (1) nach mindestens einem der vorhergehenden Ansprüche 1 bis 5,
**dadurch gekennzeichnet,**
**dass** der Zentrifugalabscheider (3) ein Hochtemperaturzentrifugalabscheider ist.

7. Verfahren zum Trocknen von feuchter Druckluft (5) bei einem Druckluftspeicher-Turbinen-Kraftwerk (1), aufweisend einen Speicher (2) zum Speichern von Druckluft (5), einen Zentrifugalabscheider (13) und eine Turbine (4), wobei feuchte Druckluft (5) aus dem Speicher (2) über den Zentrifugalabscheider (3) der Turbine (4) zuführbar ist und wobei der Zentrifugalabscheider (3) zum Abscheiden von Kondensat (6) aus der Druckluft (5) ausgebildet ist,
**dadurch gekennzeichnet,**
**dass** die dem Zentrifugalabscheider (3) zuströmende Druckluft (5) durch eine Kühleinrichtung (7), die zwischen dem Speicher (2) und dem Zentrifugalabscheider (3) angeordnet ist, gekühlt wird.

8. Verfahren nach Anspruch 7,
**dadurch gekennzeichnet,**
**dass** die der Turbine (4) zuströmende Druckluft (5) durch eine Heizeinrichtung (8), die zwischen dem Zentrifugalabscheider (3) und der Turbine (4) angeordnet ist, aufgeheizt wird.

9. Verfahren nach Anspruch 8,
**dadurch gekennzeichnet,**
**dass** das aufgeheizte Kühlmedium (9) der Kühleinrichtung (7) der Heizeinrichtung (8) zum Aufheizen der Druckluft (5) nach dem Zentrifugalabscheider (3) zugeführt wird.

10. Verfahren nach mindestens einem der vorhergehenden Ansprüche 7 bis 9,
**dadurch gekennzeichnet,**
**dass** nach dem Zentrifugalabscheider (3), insbesondere nach der Heizeinrichtung (7), über eine Brennstoffeindüsung (11) Brennstoff (14) in die getrocknete Druckluft (5) eingedüst wird und dass das Druckluft/Brennstoff-Gemisch (13) einer Brennkammer (12) zugeführt wird.

11. Verfahren nach mindestens einem der vorhergehenden Ansprüche 6 bis 9,
**dadurch gekennzeichnet,**
**dass** das Verfahren bei einem Druckluftspeicher-Turbinen-Kraftwerk (1) gemäß einem der Ansprüche 1 bis 6 durchgeführt wird.
